# EUROPEAN PATENT APPLICATION

(11) **EP 4 684 868 A1**
(43) Date of publication of application: **28.01.2026**
(21) Application number: 25189176.8
(22) Date of filing: 11.07.2025
(51) Int. Cl.: B01F 31/87, B01F 101/23

(54) **SYSTEM AND METHOD FOR ADJUSTING THE SPACING OF SAMPLES FROM AN ULTRASONIC HORN**

(30) Priority: 23.07.2024 US 202418781332
(71) Applicant: Sonics & Materials, Inc., Newtown, CT 06470 (US)
(72) Inventor: Rushton, Andrew, Southbury, 06708 (US); Vargas, Sr., Sigfredo, Waterbury, 06708 (US)
(74) Representative: Kanved, Nicolai

(57) **Abstract**

A system (10) for the ultrasonic preparation of samples includes an ultrasonic horn (14) having a face (16), a support bracket (22), and a rack (24). The support bracket includes first and second portions (42, 44) moveable with respect to each other, such that movement between the two varies a distance between the rack and the horn face. The first and second portions are securable with respect to each other, such that the distance between the rack and the horn face can be maintained. A spacer (60) having a dimension equal to a target distance between the rack and the horn face is positioned between the rack and horn face such that the first and second portions are moved with respect to each other until the target distance is achieved, the first and second portions are secured with respect to each other, and then the spacer is removed.

## Description

### FIELD OF THE INVENTION

The present invention relates generally to a system and method for ultrasonic sample preparation, and more particularly to such systems and methods wherein the samples to be processed are disposed in vessels, such as microplates or the like.

### BACKGROUND OF THE INVENTION

Ultrasound is frequently used for sample preparation, including the processing, disrupting, and/or homogenizing of biological, chemical, and industrial substances. Microplates are frequently used in molecular biology applications, particularly in sample processing (i.e., genomic DNA, chromatin, cells, tissues, etc.) for a range of high-throughput analytical techniques, including next-generation sequencing, chromatin immunoprecipitation, quantitative polymerase chain reaction, and the like. Focused ultrasound may be used for sample processing. However, traditional technologies typically can only process one sample at a time, which prolongs processing time and significantly drives up the labor costs. Additionally, since processing occurs serially, a robotic system is used to raster scan the microplate across the single-focus transducer. This also drives up the instrument cost.

When there are multiple samples to process, sonication can be performed serially (one at a time), or the sonication system can be optimized in various ways to sonicate multiple samples simultaneously. When sonicating multiple samples simultaneously, it is desirable to achieve a certain level of uniformity that equates to consistent processing depending on the application. The level of uniformity should match that of serial (one at a time) sonication. There are many types of sonication methods and devices available, many of which can accommodate simultaneous sonication of multiple samples. Types of devices include cup horn sonicators, microplate horn sonicators, bath sonicators, focused sonicators (a holographic lens can be designed to produce multiple foci), and probe-tip sonicators, which are not designed for multi-sample sonication.

One consideration when sonicating multiple samples simultaneously is the uniformity of the acoustic field of the sonicator. Without a uniform field, techniques such as linear translation or circular rotation are required to ensure each sample receives the same amount of acoustic energy. Another design consideration is the acoustic scattering effect of the sample vessels themselves and how those interactions affect the uniformity of the acoustic field at the target axial depth (position of the sample). For example, consider that a perfectly uniform acoustic field is designed for sonicating a 96-well PCR plate, such that consistent acoustic energy can be measured at the location of each of the wells of the 96-well plate. The reflections, refractions, scattering, and absorption of the ultrasound energy by each of the PCR plate wells (including the contents of each well) may interfere with the incident acoustic wave in a way where all wells do not receive the same magnitude ultrasound energy over a period of active sonication time. Various techniques are known for attempting to address these issues, with great care being taken to ensure that each of the PCR plate wells received substantially the same amount of acoustic energy. However, it is critical for these techniques to operate effectively for a consistent spacing to be maintained between the lower wall of the wells and the upper surface of the ultrasonic horn.

Typically, a rack is provided, which supports the 96-well plate, as well as, optionally, various acoustic energy reflectors and the like,above and spaced apart from the upper surface of an ultrasonic horn. This is trypically achieved using a multi-piece assembly, including a collar and a support bracket, which sits on top of the collar and which, in turn, is connected to the rack. The collar often generally has a lower polymer section, which surrounds the horn and can be sealed thereto using an o-ring and/or a flange, and an upper section, often formed of a transparent acrylic so as to allow viewing of the samples during preparation.

Each of these components, and the cooperation therebetween, has its own tolerances (e.g., the position of the o-ring channel in the horn, the position of the o-ring channel in the lower section of the collar, the vertical dimension of the lower section of the collar, the vertical dimension of the upper section of the collar, the vertical dimension of the support bracket, the vertical dimension of the rack, etc.), such that these tolerances can build up (i.e., "stack") easily and affect the spacing between the bottom of the microplate and the upper face of the ultrasonic horn, which is critical. Ensuring that these stacked tolerances are compensated for, such that the correct spacing exists between the the bottom of the microplate and the upper face of the ultrasonic horn, has heretofore been a time and labor intensive process.

Moreover, different sized and/or shaped sample vessels may require different spacings between the bottoms thereof and the top surface of the ultrasonic horn. For example, a 96-well PCR plate may require a different spacing from the horn than does a 48 well plate or a 384 well plate. There has heretofore been no way to quickly and easily, and with great accuracy and repeatability, adjust the height of the rack to ensure the proper spacing when a change is made from one sample vessel to another.

The present invention, therefore, aims to remedy these problems by providing a system and method that allows one to quickly and easily set the distance from the bottom of the sample vessel (e.g., the well plate) to the horn face, which allows for multiple configurations of sample vessels to be easily accommodated, that provides for repeatable and consistent spacing to be achieved each and every time an adjustment is made and that is always referenced from the horn face itself, such that tolerance stacking can be avoided.

### SUMMARY OF THE INVENTION

In accordance with one aspect of the present invention, a system for the ultrasonic preparation of samples disposed in a sample vessel includes an ultrasonic horn having a face adapted to impart ultrasonic energy to the samples, a collar adapted to cooperate at a lower end thereof with the horn, the collar and the horn defining a reservoir adapted to receive a liquid, a support bracket positioned on the collar, and a rack carried by the support bracket and positioned in a spaced apart relationship with the face of the horn, the rack being configured to receive the sample vessel and maintain the sample vessel in a position spaced apart from the face of the horn. The support bracket includes a first portion positioned on the collar and a second portion carrying the rack, the first portion and the second portion being moveable with respect to each other, such that moving the first and second portions with respect to each other varies a distance between the rack and the face of the horn, and wherein the first portion and the second portion are securable with respect to each other, such that the distance between the rack and the face of the horn can be maintained. A spacer having a dimension equal to a target distance between the rack and the face of the horn is adapted to be positioned between the rack and the face of the horn such that the first and second portions of the support bracket can be moved with respect to each other until the target distance between the rack and the face of the horn is achieved, the first portion and the second portion can be secured with respect to each other, and then the spacer can be removed.

In some embodiments, one of the first portion and the second portion of the support bracket has an elongated slot formed therein. In certain of these embodiments, the other of the first portion and the second portion of the support bracket not having the elongated slot formed therein has a threaded hole formed therein, and the system further includes a threaded fastener cooperating with the threaded hole. In an unsecured position, the threaded fastener slides within the elongated slot as the first portion and the second portion of the support bracket are moved with respect to each other, and the first portion and the second portion of the support bracket are securable with respect to each other via tightening of the threaded fastener. In certain embodiments, the threaded fastener comprises a thumb screw.

In some embodiments, the spacer comprises a plurality of spacers having a plurality of different dimensions equal to a plurality of different predefined target distances between the rack and the face of the horn, whereby the system is adapted to accommodate sample vessels having different configurations.

In some embodiments, the horn has an outer periphery that is substantially cylindrical and the collar has an inner periphery that is substantially cylindrical. In certain of these embodiments, an o-ring is disposed between the outer periphery of the horn and the inner periphery of the collar, the o-ring defining a liquid-tight seal between the horn and the collar.

In some embodiments, the collar comprises an upper part and a lower part attached to one another. In certain of these embodiments, the upper and lower parts of the collar are formed from polymeric materials, and at least the upper part of the collar is formed from a transparent material, whereby the sample vessel is viewable through the upper part of the collar.

In some embodiments, the sample vessel forms part of the system. In certain of these embodiments, the sample vessel comprises a microplate.

In accordance with another aspect of the present invention, a method is provided for the ultrasonic preparation of samples disposed in a sample vessel employing a system comprising an ultrasonic horn having a face adapted to impart ultrasonic energy to the samples, a collar adapted to cooperate at a lower end thereof with the ultrasonic horn, the collar and the ultrasonic horn defining a reservoir adapted to receive a liquid, a support bracket positioned on the collar, and a rack carried by the support bracket and positioned in a spaced apart relationship with the face of the horn, the rack being configured to receive the sample vessel and maintain the sample vessel in a position spaced apart from the face of the horn, wherein the support bracket comprises a first portion positioned on the collar and a second portion carrying the rack, the first portion and the second portion being moveable with respect to each other. The method comprises the steps of: (i) positioning a spacer between the rack and the face of the horn, the spacer having a dimension equal to a target distance between the rack and the face of the horn; (ii) moving the first and second portions of the support bracket such that the spacer contacts the face of the horn and the rack contacts the spacer; (iii) securing the first and second portions of the support bracket in a fixed position with respect to each other; (iv) removing the spacer, such that the target distance between the rack and the face of the horn is maintained; and (v) positioning the sample vessel on the rack.

In some embodiments, the method further comprises, before the step of positioning a spacer, the step of: selecting, from a plurality of spacers having a plurality of different dimensions equal to a plurality of different predefined target distances between the rack and the face of the horn, one of the plurality of spacers having dimensions appropriate for the sample vessel, whereby the method is adapted to accommodate a plurality of different sample vessels having different configurations.

In some embodiments, one of the first portion and the second portion of the support bracket has an elongated slot formed therein. In certain of these embodiments, the other of the first portion and the second portion of the support bracket not having the elongated slot formed therein has a threaded hole formed therein, a threaded fastener is provided cooperating with the threaded hole, and the method further comprises the steps of: causing to slide, when in an unsecured position, the threaded fastener within the elongated slot as the first portion and the second portion of the support bracket are moved with respect to each other, and tightening the threaded fastener in order to secure the first portion and the second portion of the support bracket with respect to each other. In certain embodiments, the threaded fastener comprises a thumb screw, and the step of tightening the threaded fastener comprises the step of turning the thumb screw.

The present invention, therefore, provides a system and method that allows one to quickly and easily set the distance from the bottom of the sample vessel (e.g., the well plate) to the horn face, which allows for multiple configurations of sample vessels to be easily accommodated, that provides for repeatable and consistent spacing to be achieved each and every time an adjustment is made and that is always referenced from the horn face itself, such that tolerance stacking can be avoided.

Other features and advantages of the invention will become more apparent from consideration of the following drawing.

### BRIEF DESCRIPTION OF THE DRAWINGS

FIG. 1 is a side, partially cross-sectional view showing a system for the ultrasonic preparation of samples disposed in a sample vessel in accordance with an exemplary embodiment of the present invention, shown with a spacer employed during a setting operation;
FIG. 2 is a side, partially cross-sectional view showing the system shown in FIG. 1, shown with the spacer removed and a sample vessel inserted in position for sample preparation;
FIGS. 3A-3C are side isometric, side elevational and top plan views of a horn portion of the system shown in FIG. 1;
FIGS. 4A-4C are side isometric, side elevational and top plan views of a collar portion of the system shown in FIG. 1;
FIGS. 5A-5C are side isometric, side elevational and top plan views of a lower collar part of the collar shown in FIGS. 4A-4C and in FIG. 1;
FIGS. 6A-6C are side isometric, side elevational and top plan views of an upper collar part of the collar shown in FIGS. 4A-4C and in FIG. 1;
FIGS. 7A-7C are side isometric, side elevational and bottom plan views of an outer support portion of the system shown in FIG. 1;
FIGS. 8A-8C are side isometric, side elevational and bottom plan views of an inner support portion of the system shown in FIG. 1;
FIGS. 9A-9C are side isometric, side elevational and bottom plan views of a rack portion of the system shown in FIG. 1;
FIGS. 10A-10C are side isometric, side elevational and top plan views of a spacer portion of the system shown in FIG. 1; and
FIGS. 11A and 11B are side elevational views showing spacers similar to those shown in FIGS. 10A-10C, but having different dimensions so as to allow one to set different target spacings.

### DETAILED DESCRIPTION OF THE INVENTION

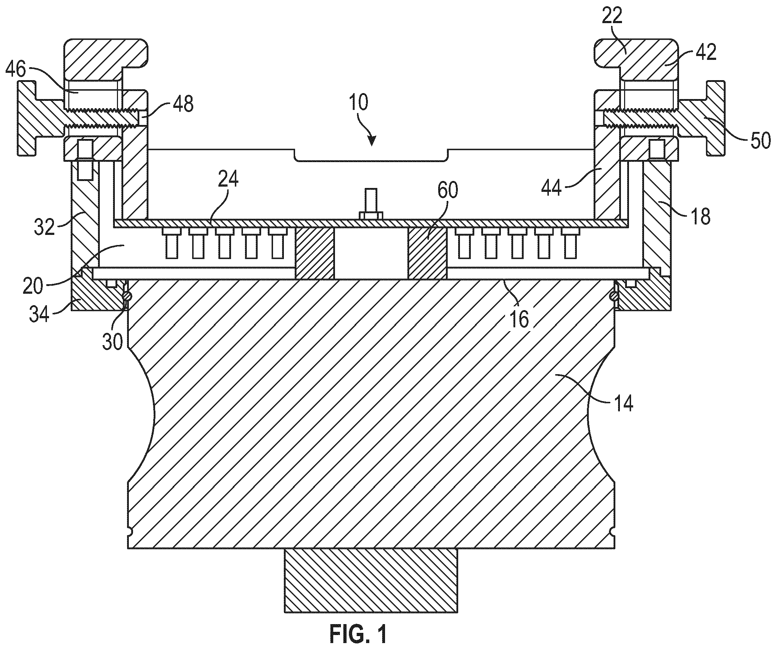

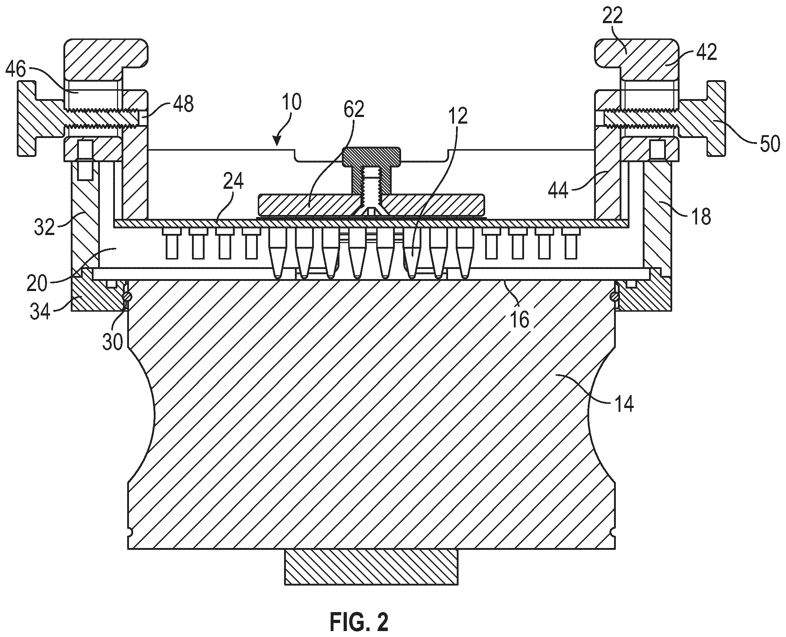

FIGS. 1 and 2 illustrate a system (10) for the ultrasonic preparation of samples disposed in a sample vessel (12) configured in accordance with an exemplary embodiment of the present invention. The system (10) generally includes an ultrasonic horn (14) having a face (16) adapted to impart ultrasonic energy to the samples, a collar (18) adapted to cooperate at a lower end thereof with the horn (14), the collar (18) and the horn (14) defining a reservoir (20) adapted to receive a liquid (not shown), a support bracket (22) positioned on the collar (18), and a rack (24) carried by the support bracket (22) and positioned in a spaced apart relationship with the face (16) of the horn (14), the rack (24) being configured to receive the sample vessel (12) and maintain the sample vessel (12) in a position spaced apart from the face (16) of the horn (14).

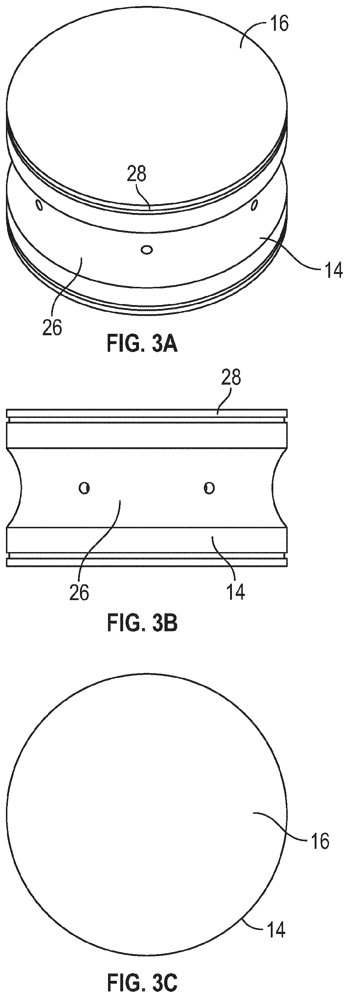

Referring specifically now to FIGS. 3A-3C in addition to FIGS. 1 and 2, the ultrasonic horn (14) is shown in more detail. The horn (14) may have any of various different configurations, and may be configured, for example, as a bath horn, a cup horn, a cylindrical horn, a stepped horn, a barbell horn, etc. Additionally, the horn (14) may be provided with one or more recesses or scallops. The horn (14) shown in the Figures is an accordion style horn having a single scallop (26) formed in a side wall thereof. The illustrated horn (14) has an outer periphery that is substantially cylindrical and also includes an o-ring channel (28) formed in the periphery thereof adjacent to the face (16), which receives an o-ring (30) therein, as shown in FIGS. 1 and 2. However, the horn (14) may in addition, or instead, be provided with a mounting flange to facilitate mounting of the horn (14) within the system (10).

During operation, the horn (14) may be vibrated in the ultrasonic frequency range by employing various technologies that are well-known in the art, such as by employing piezoelectric transducers. The illustrated horn (14) is particularly configured to operate at a frequency of 20 kHz ±50 Hz, although various other frequencies, such as 40 kHz, may be employed.

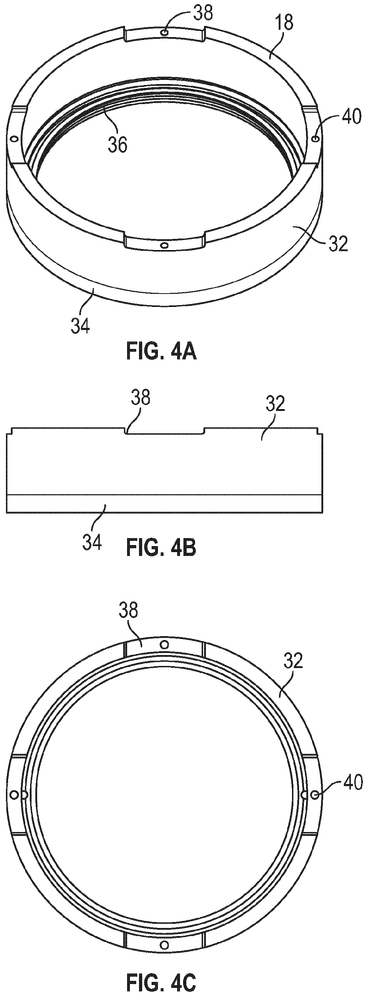

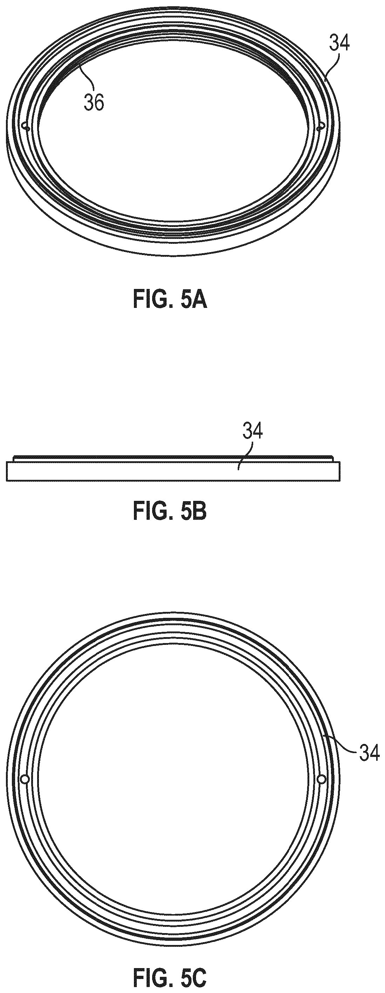

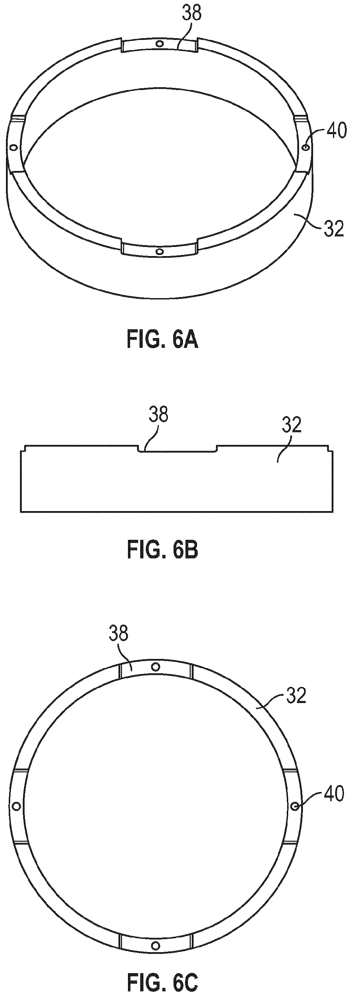

Referring now to FIGS. 4A-6C in addition to FIGS. 1 and 2, the collar (18) is shown in more detail. The collar (18) preferably comprises an upper part (32) and a lower part (34) attached to one another. The upper (32) and lower parts (34) of the collar (18) are formed from polymeric materials. At least the upper part (32) of the collar (18) is formed from a transparent material, whereby the sample vessel (12) is viewable through the upper part (34) of the collar (18). If desired, the lower part (34) of the collar (18) may also be formed from a transparent material. Also, if desired, the upper (32) and lower (34) parts of the collar (18) may be formed from a single monolithic piece of material.

The lower part (34) of the collar (18) has an inner periphery that is substantially cylindrical, with an o-ring channel (36) formed therein. The o-ring (30) is disposed between the outer periphery of the horn (14), in the o-ring channel (28) thereof, and the inner periphery of the collar (18), in the o-ring channel (36) thereof, to define a liquid-tight seal between the horn (14) and the collar (18). The liquid tight seal helps define the reservoir (20).

The upper part (32) of the collar (18) may be provided with one or more recesses (38) sized and shaped to receive a portion of the support bracket (22), as described in more detail below. The recesses (38) may also be provided with one or more holes (40) adapted to receive fasteners and/or dowel/alignment pins or the like (not shown) to facilitate cooperation between the collar (18) and the support bracket (22).

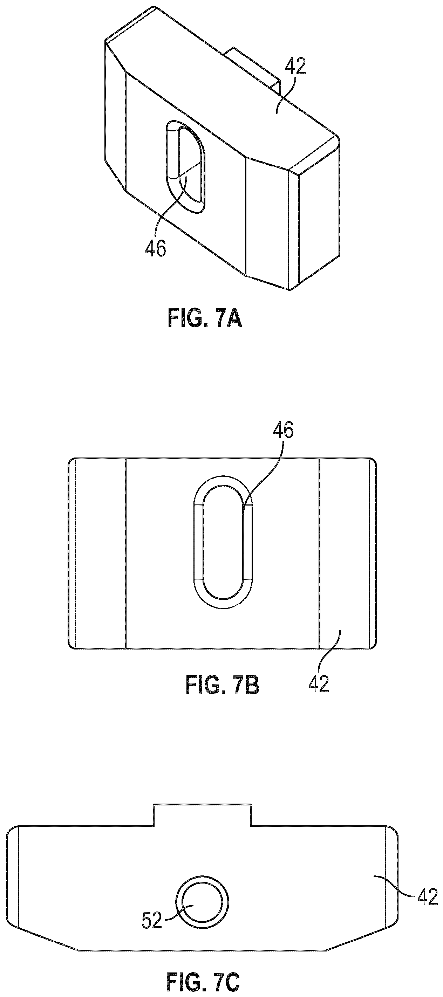

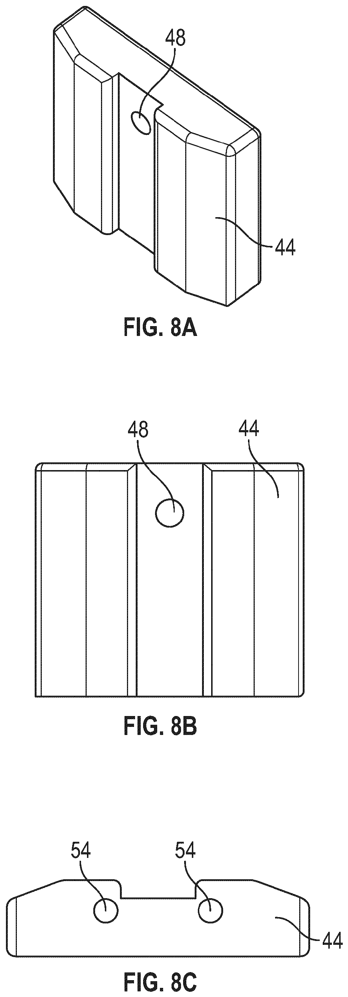

Referring now to FIGS. 7A-8C in addition to FIGS. 1 and 2, the support bracket (22) includes an outer portion (42) positioned on the collar (18) and an inner portion (44) carrying the rack (24). The outer portion (42) and the inner portion (44) are moveable with respect to each other (in an updown direction with respect to the orientation shown in FIGS. 1 and 2), such that moving the outer portion (42) and the inner portion (44) with respect to each other varies a distance between the rack (24) and the face (16) of the horn (14). When in the desired position, the outer portion (42) and the inner portion (44) are securable with respect to each other, such that the distance between the rack (24) and the face (16) of the horn (14) can be maintained.

The relative movement between the outer portion (42) and the inner portion (44), and the securing of the components with respect to each other, can be achieved in various ways. In the shown embodiment, the outer portion (42) of the support bracket (22) has an elongated slot (46) formed therein, while the inner portion (44) of the support bracket (22) has a threaded hole (48) formed therein. The support bracket (22) further includes a threaded fastener (50), such as a thumb screw, passing through the elongated slot (46) formed in the outer portion (42) and cooperating with the threaded hole (48) in the inner portion (44). In an unsecured position (i.e., when the threaded fastener (50) is loosened), the threaded fastener (50) slides within the elongated slot (46) as the outer portion (42) and the inner portion (44) of the support bracket (22) are moved with respect to each other. The outer portion (42) and the inner portion (44) of the support bracket (22) are securable with respect to each other via tightening of the threaded fastener (50).

As shown in FIGS. 1 and 2, the support bracket (22) may comprise a pair of outer portions (42), a pair of inner portions (44) and a pair of threaded fasteners (50), disposed on the collar (18) on opposite sides of the rack (24).

The outer portion (42) of the support bracket (22) is sized and shaped to be disposed within one of the recesses (38) provided in the upper part (32) of the collar (18). The lower edge of the outer portion (42) may also be provided with one or more holes (52) adapted to receive fasteners and/or dowel/alignment pins or the like (not shown) to facilitate cooperation between the collar (18) and the support bracket (22).

The lower edge of the inner portion (44) may also be provided with one or more holes (54) - two are shown in the Figures -- adapted to receive fasteners or the like (not shown) to facilitate attachment of the rack (24) to the inner portion (44) the support bracket (22). Of course, it will be recognized that other attachment techniques may be employed in addition or instead.

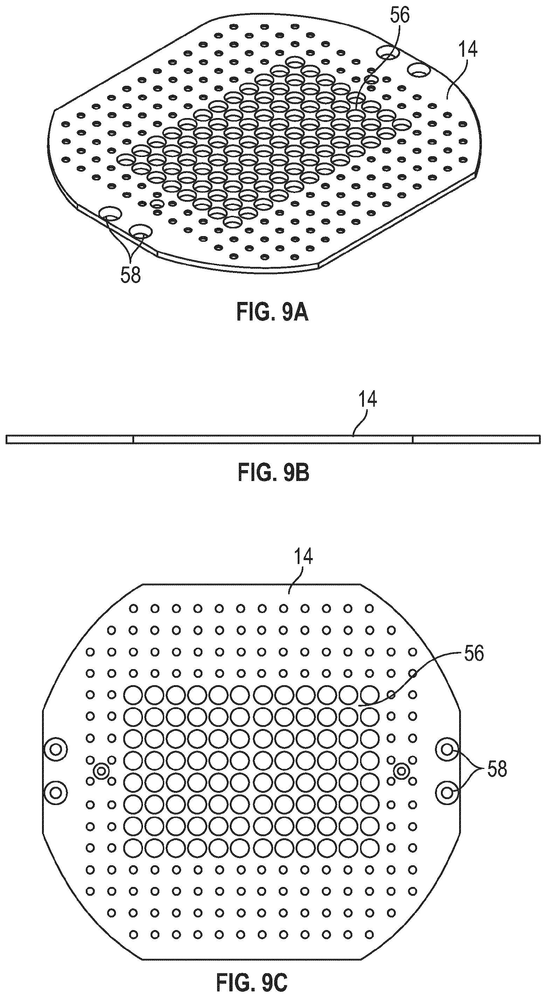

With reference now to FIGS. 9A-9C in addition to FIGS. 1 and 2, the rack (24) is shown in more detail. The rack (24) includes a sample-vessel receiving area (56) comprising, in the illustrated embodiment, an array of 12 x 8 openings that are sized and spaced in order to accommodate a standard 96-well microplate (12) (shown in FIG. 2). However, it should be recognized that other sized microplates, or other types of sample vessels entirely, may be accommodated by varying the configuration of the sample receiving area (56).

The rack (24) may also be provided with one or more holes (58) - two are shown in the Figures -- adapted to receive fasteners or the like (not shown) to facilitate attachment of the rack (24) to the inner portion (44) the support bracket (22). Of course, as noted above, it will be recognized that other attachment techniques may be employed in addition or instead.

The rack (24) may further be provided with various other openings, channels, apertures, protuberances or other features, so as to accommodate various other components, such as energy reflectors, redirectors, dampers, or the like, as are known in the art. Since these elements form no part of the invention, they will not be described in detail herein.

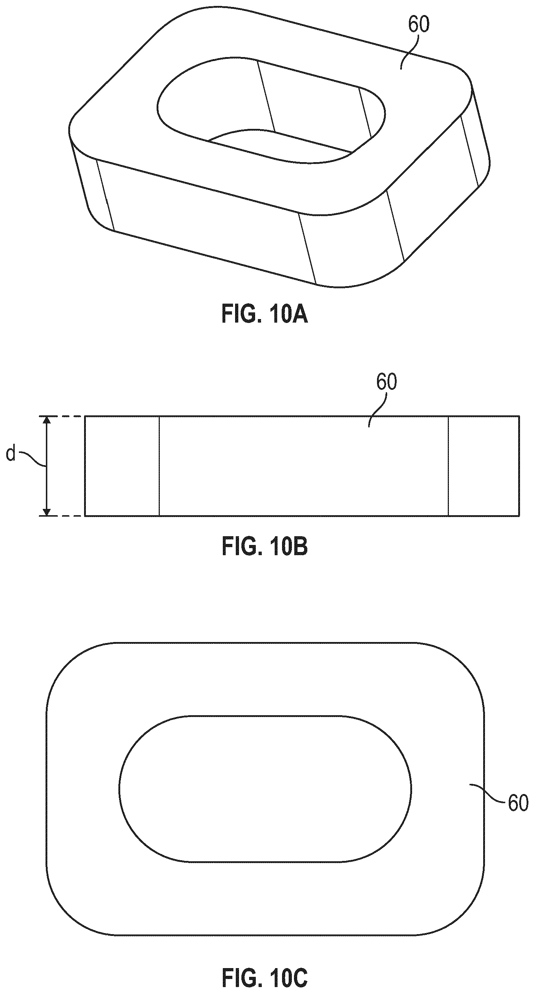

Referring now to FIGS. 1 and 10A-10C, a spacer (60) having a thickness (d) equal to a target distance between the rack (24) and the face (16) of the horn (14) is adapted to be positioned between the rack (24) and the face (16) of the horn (14) such that the outer portion (42) and the inner portion (44) of the support bracket (22) can be moved with respect to each other until the target distance between the rack (24) and the face (16) of the horn (14) is achieved, the outer portion (42) and the inner portion (44) of the support bracket (22) can be secured with respect to each other, and then the spacer (60) can be removed.

More specifically, in accordance with another aspect of the present invention, a method is provided for the ultrasonic preparation of samples disposed in a sample vessel employing a system as described above. The method comprises the steps of: (i) positioning the spacer (60) between the rack (24) and the face (16) of the horn (14), the spacer (60) having a dimension (d) equal to a target distance between the rack (24) and the face (16) of the horn (14); (ii) moving the outer portion (42) and the inner portion (44) of the support bracket (22) with respect to each other such that the spacer (60) contacts the face (16) of the horn (14) and the rack (24) contacts the spacer (60); (iii) securing the outer portion (42) and the inner portion (44) of the support bracket (22) in a fixed position with respect to each other (e.g., by tightening the threaded fastener (50)); (iv) removing the spacer (60), such that the target distance between the rack (24) and the face (16) of the horn (14) is maintained; and (v) positioning the sample vessel (12) on the rack (24). Optionally, a weight (62) may be disposed on top of the sample vessel (12) to help retain it in place. Generally, steps (i) - (iii) are illustrated in FIG. 1, while steps (iv) - (v), as well as the optional disposing of a weight step, are illustrated in FIG. 2.

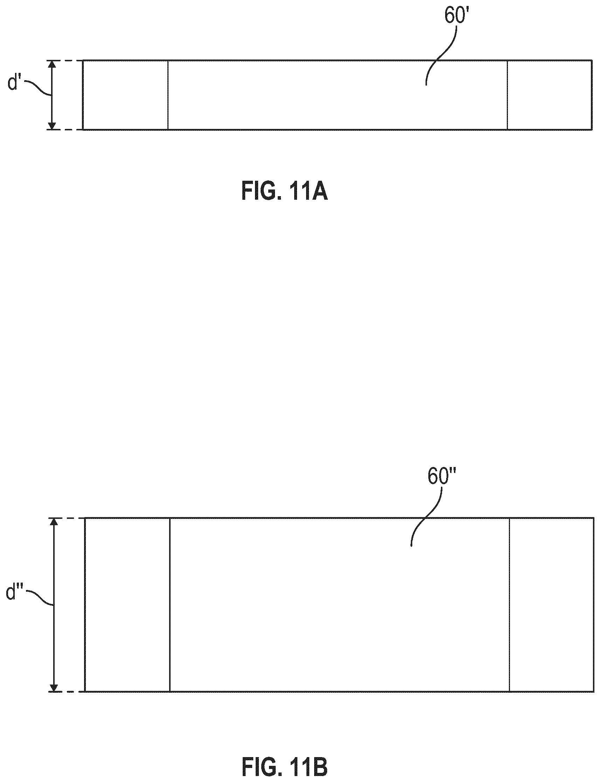

Advantageously, as best seen by comparing FIGS. 10B, 11A and 11B, a plurality of spacers (60, 60', 60") having a plurality of different dimensions (d, d', d") equal to a plurality of different predefined target distances between the rack (24) and the face (16) of the horn (14) are provided. By doing such, the system (10) is adapted to accommodate sample vessels (12) having different configurations (i.e., different sample vessels may have different optimum spacings from the horn). In these cases, the inventive method described above further involves selecting, from a plurality of spacers (60, 60', 60") having a plurality of different dimensions (d, d', d") equal to a plurality of different predefined target distances between the rack (24) and the face (16) of the horn (14), one of the plurality of spacers (60, 60', 60") having dimensions appropriate for the sample vessel.

In view of the above, it will be recognized that the inventive system and method allows one to quickly and easily set the distance from the bottom of the sample vessel (e.g., the well plate) to the horn face, allows for multiple configurations of sample vessels to be easily accommodated, and provides for repeatable and consistent spacing to be achieved each and every time an adjustment is made and that is always referenced from the horn face itself, such that tolerance stacking can be avoided.

Although the invention has been described with reference to a particular arrangement of parts, features and the like, these are not intended to exhaust all possible arrangements or features, and indeed many other modifications and variations will be ascertainable to those of skill in the art.

## Claims

1. A system for the ultrasonic preparation of samples disposed in a sample vessel, said system comprising:
an ultrasonic horn having a face adapted to impart ultrasonic energy to the samples;
a collar adapted to cooperate at a lower end thereof with said horn, said collar and said horn defining a reservoir adapted to receive a liquid;
a support bracket positioned on said collar;
a rack carried by said support bracket and positioned in a spaced apart relationship with the face of said horn, said rack being configured to receive the sample vessel and maintain the sample vessel in a position spaced apart from the face of said horn;
wherein said support bracket comprises a first portion positioned on said collar and a second portion carrying said rack, the first portion and the second portion being moveable with respect to each other, such that moving the first and second portions with respect to each other varies a distance between said rack and the face of said horn, and wherein the first portion and the second portion are securable with respect to each other, such that the distance between said rack and the face of said horn can be maintained; and
a spacer having a dimension equal to a target distance between said rack and the face of said horn, said spacer adapted to be positioned between said rack and the face of said horn such that the first and second portions of said support bracket can be moved with respect to each other until the target distance between said rack and the face of said horn is achieved, the first portion and the second portion can be secured with respect to each other, and then said spacer can be removed.

2. The system of Claim 1 wherein one of the first portion and the second portion of said support bracket has an elongated slot formed therein.

3. The system of Claim 2 wherein the other of the first portion and the second portion of said support bracket not having the elongated slot formed therein has a threaded hole formed therein;
further comprising a threaded fastener cooperating with the threaded hole; and
wherein, when in an unsecured position, said threaded fastener slides within the elongated slot as the first portion and the second portion of said support bracket are moved with respect to each other, and wherein the first portion and the second portion of said support bracket are securable with respect to each other via tightening of the threaded fastener.

4. The system of Claim 3 wherein said threaded fastener comprises a thumb screw.

5. The system of any one of the preceding claims wherein said spacer comprises a plurality of spacers having a plurality of different dimensions equal to a plurality of different predefined target distances between said rack and the face of said horn, whereby said system is adapted to accommodate sample vessels having different configurations.

6. The system of any one of the preceding claims wherein said horn has an outer periphery that is substantially cylindrical and wherein said collar has an inner periphery that is substantially cylindrical.

7. The system of Claim 6 further comprising an o-ring disposed between the outer periphery of said horn and the inner periphery of said collar, said o-ring defining a liquid-tight seal between said horn and said collar.

8. The system of any one of the preceding claims wherein said collar comprises an upper part and a lower part attached to one another.

9. The system of Claim 8 wherein the upper and lower parts of said collar are formed from polymeric materials, and wherein at least the upper part of said collar is formed from a transparent material, whereby the sample vessel is viewable through the upper part of said collar.

10. The system of any one of the preceding claims further comprising the sample vessel.

11. The system of Claim 10 wherein the sample vessel comprises a microplate.

12. A method for the ultrasonic preparation of samples disposed in a sample vessel employing a system comprising an ultrasonic horn having a face adapted to impart ultrasonic energy to the samples, a collar adapted to cooperate at a lower end thereof with the ultrasonic horn, the collar and the ultrasonic horn defining a reservoir adapted to receive a liquid, a support bracket positioned on said collar, and a rack carried by the support bracket and positioned in a spaced apart relationship with the face of the horn, the rack being configured to receive the sample vessel and maintain the sample vessel in a position spaced apart from the face of the horn, wherein the support bracket comprises a first portion positioned on the collar and a second portion carrying the rack, the first portion and the second portion being moveable with respect to each other, said method comprising the steps of:
positioning a spacer between the rack and the face of the horn, the spacer having a dimension equal to a target distance between the rack and the face of the horn;
moving the first and second portions of the support bracket such that the spacer contacts the face of the horn and the rack contacts the spacer;
securing the first and second portions of the support bracket in a fixed position with respect to each other;
removing the spacer, such that the target distance between the rack and the face of the horn is maintained; and
positioning the sample vessel on the rack.

13. The method of Claim 12 further comprising, before the step of positioning a spacer, the step of:
selecting, from a plurality of spacers having a plurality of different dimensions equal to a plurality of different predefined target distances between the rack and the face of the horn, one of the plurality of spacers having dimensions appropriate for the sample vessel,
whereby the method is adapted to accommodate a plurality of different sample vessels having different configurations.

14. The method of Claim 12 wherein one of the first portion and the second portion of the support bracket has an elongated slot formed therein.

15. The method of Claim 14 wherein the other of the first portion and the second portion of the support bracket not having the elongated slot formed therein has a threaded hole formed therein, wherein a threaded fastener is provided cooperating with the threaded hole, and further comprising the steps of:
causing to slide, when in an unsecured position, the threaded fastener within the elongated slot as the first portion and the second portion of the support bracket are moved with respect to each other, and
tightening the threaded fastener in order to secure the first portion and the second portion of the support bracket with respect to each other.

16. The method of Claim 15 wherein said threaded fastener comprises a thumb screw, and wherein the step of tightening the threaded fastener comprises the step of turning the thumb screw.
